(19) Europäisches Patentamt
European Patent Office
Office européen des brevets

(11) Publication number: **0 325 052 B1**

(12) **EUROPEAN PATENT SPECIFICATION**

(45) Date of publication of patent specification: **02.11.94**

(51) Int. Cl.5: **C08G 2/06**, C08G 2/08, C08G 2/10, C08G 2/18

(21) Application number: **88312158.4**

(22) Date of filing: **21.12.88**

# (54) Process for the preparation of acetal polymer or copolymer.

(30) Priority: **25.12.87 JP 329240/87**

(43) Date of publication of application:
**26.07.89 Bulletin 89/30**

(45) Publication of the grant of the patent:
**02.11.94 Bulletin 94/44**

(84) Designated Contracting States:
**AT BE CH DE ES FR GB GR IT LI LU NL SE**

(56) References cited:
**EP-A- 0 129 369**
**DE-A- 3 106 476**

**PATENT ABSTRACTS OF JAPAN, vol. 9, no. 108, (C-280)(1831), 11 May 1985; & JP-A-601179**

**PATENT ABSTRACTS OF JAPAN, vol. 5, no. 195 (C-83)(867), 11 December 1981; & JP-A-56118079**

(73) Proprietor: **POLYPLASTICS CO. LTD.**
**30, Azuchimachi 2-chome**
**Higashi-ku Osaka-shi Osaka (JP)**

(72) Inventor: **Yamamoto, Kaoru**
**52, Morishita, Fuji-shi**
**Shizuoka (JP)**
Inventor: **Sano, Hiroyuki**
**885-11, Miyajima, Fuji-shi**
**Shizuoka (JP)**
Inventor: **Chino, Shuichi**
**885-11, Miyajima, Fuji-shi**
**Shizuoka (JP)**

(74) Representative: **Jackson, Peter et al**
**HYDE, HEIDE & O'DONNELL**
**10-12 Priests Bridge**
**London SW15 5JE (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for the preparation of an acetal polymer or copolymer.

Particularly, it relates to a novel process for the preparation of an acetal polymer or copolymer which comprises polymerizing formaldehyde or a cyclic oligomer thereof as a principal monomer, characterized by using a heteropoly acid or an acid salt thereof as a catalyst.

[ Statement of Prior Arts ]

Oxyalkylene polymers, particularly oxymethylene polymers having a repeating unit of $-CH_2O-$ have been known since a long time ago. Known polymerization processes for the preparation thereof are broadly classified into two groups. One of them is a process comprising polymerizing anhydrous formaldehyde as a principal monomer, while the other is a process comprising polymerizing, as a principal monomer, a cyclic acetal such as trioxane which is a cyclic trimer of formaldehyde.

With respect to the former, it has been proposed to (co)polymerize substantially anhydrous formaldehyde in the presence of an anionic or cationic catalyst, while with respect to the latter, it has been proposed in our earlier European Patent Specification EP 0 129 369 to carry out the (co)polymerization of a cyclic acetal (such as trioxane) as a principal monomer in the presence of a cationic catalyst. Examples of the catalysts which have been proposed include Lewis acids such as halides of boron, tin, titanium, phosphorus, arsenic and antimony, particularly, boron trifluoride, tin tetrachloride, titanium tetrachloride, phosphorus pentachloride, phosphorus pentafluoride, arsenic pentafluoride, antimony pentafluoride and complex compounds and salts thereof; protonic acids such as perchloric acid; protonic acid esters such as esters of perchloric acid with lower aliphatic alcohols, particularly t-butyl perchlorate; protonic acid anhydrides, particularly mixed acid anhydrides of perchloric acid with lower aliphatic carboxylic acids, such as acetyl perchlorate; trimethyloxonium hexafluorophosphate, triphenylmethyl hexafluoroarsenate, acetyl tetrafluoroborate, acetyl hexafluorophosphate and acetyl hexafluoroarsenate. Among them, boron fluoride and coordination compounds thereof with an organic compound such as an ether are most generally used as a catalyst for (co)polymerizing a cyclic oligomer of formaldehyde such as trioxane as a principal monomer and are frequently used in the (co)polymerization on an industrial scale. However, the (co)polymer prepared by the use of any of known catalysts as described above is limited in the degree of polymerization, so that it is difficult to obtain a (co)polymer having a degree of polymerization exceeding a certain limit by the use of these catalysts.

Further, when a cyclic ether or formal having at least two adjacent carbon atoms is copolymerized with formaldehyde or a cyclic oligomer thereof by the process of the prior art for the purpose of introducing a stable unit into an acetal polymer, the copolymer just after the preparation generally contains a thermally unstable moiety at the ends of its molecule, so that the copolymer must be stabilized by the elimination of the moiety in order to put it into practical use. The elimination of unstable moieties necessitates complicated post-treatment which consumes much energy, thus being uneconomical. If the crude acetal copolymer directly obtained by the copolymerization contains only a reduced amount of an unstable moiety, the resulting final product will be improved in stability and so the post-treatment will be simplified. Accordingly, the development of a polymerization process by which an acetal copolymer containing only a reduced amount of an unstable moiety can be prepared has been expected.

[ Summary of the Invention ]

The cause of the above problems that the (co)polymer is limited in the degree of polymerization and that the copolymer contains a significant amount of an unstable end is presumably that a known polymerization catalyst as described above not only accelerates the (co)polymerization but also participates in the decomposition and depolymerization of the produced (co)polymer. Thus, the acetal (co)polymer prepared by the use of such a catalyst exhibits molecular weight, thermal stability, moldability and color which vary depending upon the kind of the catalyst. In view of these problems, the inventors of the present invention have eagerly studied on the polymerization catalysts and have found a polymerization catalyst which can overcome the above problems. The present invention has been accomplished on the basis of this finding.

Namely, the present invention relates to a process for the preparation of an acetal polymer or copolymer which comprises polymerizing anhydrous formaldehyde or a cyclic oligomer thereof alone or copolymerizing it as a principal monomer with a comonomer copolymerizable therewith, characterized by using 0.1 to 5000 ppm based on the total amount of said monomers of a heteropoly acid or an acid salt

thereof as a polymerization catalyst.

According to the present invention, an acetal polymer or copolymer can be obtained in an enhanced yield and the molecular weight of the polymer or copolymer is enhanced as compared with the case according to the prior art, even if the amount of the catalyst used is very small. Particularly, when an acetal copolymer is prepared according to the present invention, the obtained copolymer contains only a reduced amount of an unstable moiety, so that the final product obtained by subjecting the copolymer to post-treatment is also excellent in stability and the post-treatment itself can be simplified. Thus, the process of the present invention is also advantageous from the economic viewpoint.

In the present invention, a heteropoly acid or an acid salt thereof is used as a polymerization catalyst, though the use thereof as a polymerization catalyst has not been known as yet and the application thereof to the preparation of an oxymethylene polymer has not been proposed as yet. According to the present invention, by using such a polymerization catalyst, the polymerization of formaldehyde or a cyclic oligomer such as trioxane or the copolymerization thereof with a comonomer copolymerizable therewith can be carried out more easily than the process according to the prior art, even if the amount of the catalyst is very small. Further, according to the present invention, it is possible to prepare an acetal (co)polymer having a degree of polymerization higher than that of the polymer prepared by the process of the prior art. Furthermore, it is possible to prepare an acetal copolymer containing an unstable end in only a reduced amount. For these advantageous characteristics, the acetal (co)polymer prepared by the process of the present invention can be utilized in a specific field to which the (co)polymer prepared by using the catalyst of the prior art cannot be applied. Thus, the present invention provides an acetal (co)polymer which can be utilized in an extended field of application.

The 'heteropoly acid" as a polymerization catalyst, by which the present invention is characterized, is a generic term for poly acids formed by the condensation of different kinds of oxoacids through dehydration and contains a mono- or poly-nuclear complex ion wherein a hetero element is present in the center and the oxo acid residues are condensed through oxygen atoms. Such a heteropoly acid is represented by the general formula:

$H_x[Mm \cdot M'_nO_\ell]yH_2O$ (1)

wherein
M: central element, M′: ligand element,
O: oxygen atom, H: hydrogen atom,
$H_2O$: water of crystallization,
$l \leqq m \leqq 10$, $6 \leqq n \leqq 40$,
$10 \leqq \ell \leqq 100$, $l \leqq x$,
and $0 \leqq y \leqq 50$.

The central element (M) in the above formula is constituted of one or more members selected from among P, B, Si, Ge, Sn, As, Sb, U, Mn, Re, Cu, Ni, Ti, Co, Fe, Ce, Th and Cr, among which P or Si is particularly preferable. The ligand element (M′) is at least one element selected from among W, Mo, V and Nb, among which W or Mo is particularly preferred.

According to the present invention, it is possible to use acid salts of the above heteropoly acids corresponding to the compounds obtained by replacing all or part of the x H atoms in the formula (1) with various metals.

Particular examples of the heteropoly acid include molybdophosphoric acid, tungstophosphoric acid,molybdotungstophosphoric acid, molybdovanadophosphoric acid, molybdotungstovanadophosphoric acid, tungstovanadophosphoric acid, molybdoniobophosphoric acid, tungstosilicic acid,molybdosilicic acid, molybdotungstosilicic acid, molybdotungstovanadosilicic acid, tungstogermanic acid, tungstoboric acid, molybdoboric acid, molybdotungstoboric acid, molybdovanadoboric acid, molybdotungstovanadoboric acid, molybdocobaltic acid, tungstocobaltic acid, molybdoarsenic acid and tungstoarsenic acid, among which molybdosilicic acid, tungstosilicic acid, molbdophosphoric acid and tungstophosphoric acid are preferred.

The amount of the heteropoly acid or acid salt thereof to be used as a catalyst for the polymerization of a monomer component comprising formaldehyde or a cyclic oligomer thereof such as trioxane as a principal monomer is 0.1 to 5000 ppm, preferably 0.2 to 50 ppm based on the total amount of the monomer component, though it varies depending upon the kind of the catalyst or may be suitably varied to control the polymerization. When a heteropoly acid having a very high activity, for example, molybdophosphoric acid is used as a catalyst, the amount thereof is satisfactorily 0.2 to 10 ppm. The fact that the (co)polymerization can be carried out even by the use of such a small amount of a catalyst is effective in inhibiting undesired reactions such as cleavage of the main chain or depolymerization of a polymer caused by a catalyst and is

economically advantageous.

According to the present invention, it is preferable to add a heteropoly acid in a state diluted with an inert solvent which does not adversely affect the polymerization of formaldehyde or a cyclic oligomer thereof to thereby carry out the polymerization in a homogeneous system. The inert solvent includes ethers which are organic solvents in which a heteropoly acid is soluble, and n-butyl ether is preferred.

The principal monomer to be used in the present invention is anhydrous formaldehyde or a cyclic oligomer thereof, and representative examples of the latter include trioxane which is a cyclic trimer of formaldehyde and tetraoxane which is a tetramer thereof. Particularly, trioxane is the most suitable principal monomer either in homopolymerization or in copolymerization.

The process of the present invention is particularly useful for the copolymerization of formaldehyde or a cyclic oligomer thereof as a principal monomer with a comonomer copolymerizable therewith, though it is also useful for the homopolymerization of formaldehyde or a cyclic oligomer thereof. Further, the process of the present invention is useful not only for the copolymerization of formaldehyde or its cyclic oligomer such as trioxane with only one comonomer, but also for the copolymerization thereof with two or more comonomers. The comonomer includes ones which give copolymers having a branched or crosslinked structure. Representative examples of the comonomer include compounds represented by the general formula (2):

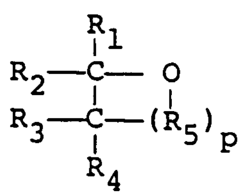

..... (2)

wherein $R_1$, $R_2$, $R_3$ and $R_4$ may be the same or different and each stand for a hydrogen atom or an alkyl or halogen-substituted alkyl group; $R_5$ stands for a methylene or oxymethylene group, an alkyl- or halogenoalkyl-substituted methylene or oxymethylene group (in this case, p is an integer of 0 to 3) or a divalent group of

$$-(CH_2)_q-OCH_2- \text{ or } -(O-CH_2-CH_2)_q-OCH_2-$$

(wherein p is 1 and q is an integer of 1 to 4). The alkyl group has 1 to 5 carbon atoms and 1 to 3 hydrogen atoms thereof may be replaced with halogen atoms, particularly chlorine atoms.

Particular examples thereof include epichlorohydrin, ethylene oxide, 1,3-dioxolane, diethylene glycol formal, 1,4-butanediol formal, 1,3-dioxane and propylene oxide. Further, cyclic esters such as $\beta$-propiolactone and vinyl compounds such as styrene and acrylonitrile may be used as the above comonomer. Furthermore, the comonomer which gives a copolymer having a branched or crosslinked structure include alkyl mono-(or di-)glycidyl ethers (or formals) such as methyl glycidyl formal, ethyl glycidyl formal, propyl glycidyl formal, butyl glycidyl formal, ethylene glycol glycidyl ether, triethylene glycol diglycidyl ether and bis(1,2,6-hexanetriol)triformal. Particularly, the catalyst according to the present invention is more effective in copolymerizing trioxane as a principal monomer with a cyclic ether or formal such as ethylene oxide, dioxolane or 1,4-butanediol formal.

In the process of the present invention, it is possible to use a conventional chain transfer agent such as a low-molecular weight linear acetal in order to adjust the degree of polymerization in accordance with the object.

The process of the present invention can be carried out by using equipment similar to the one which is used for the polymerization of formaldehyde or trioxane according to the prior art. Namely, the process of the present invention may be carried out by either a batch-wise method or a continuous one and may be applied to any of solution polymerization, melt polymerization, melt bulk polymerization and solid phase polymerization. Particularly, a process of polymerizing a liquid monomer to obtain a polymer of a solid powder or lump with the progress of the polymerization is generally employed. In this process, if necessary, an inert liquid medium may be simultaneously used.

When the process of the present invention is carried out batch-wise, the equipment may be any conventional reactor fitted with a stirrer, while when the process is carried out continuously, the equipment

includes a Ko-kneader, continuous extrusion mixers of twin-screw type, continuous mixers of twin-paddle type, other continuous polymerization equipment which has been proposed for the polymerization of trioxane, and combinations of two or more of them.

Although the polymerization temperature is not particularly limited, it varies depending upon the polymerization process or the kind of the monomer used. When trioxane is polymerized as a principal monomer by a conventional bulk polymerization, the polymerization temperature may be 64 to 120 °C. Although the polymerization time is not particularly limited, it varies depending upon the amount of the catalyst used and is generally selected in the range of 0.5 to 100 minutes. After the lapse of a predetermined time, the formed polymer is drawn from the exit of the reactor generally as lump or powder, rid of part or the whole of an unreacted monomer and fed into the following step. It is preferable to treat the reaction system after the completion of the polymerization by the addition of a conventional deactivator or a solution thereof to carry out the neutralization and deactivation of the catalyst, said deactivator including ammonia; amines such as triethylamine and tri-n-butylamine; hydroxides of alkali metals or alkaline earth metals and other known deactivators. When the obtained polymer is in a state of big lump, it is a matter of course that the above deactivation treatment is preferably carried out after the lump has been ground.

The polymer thus obtained is generally subjected to stabilization treatment. When the obtained polymer is a homopolymer of formaldehyde or a cyclic oligomer thereof, the stabilization is attained by converting the ends thereof into ester, ether or urethane groups to thereby block them, while when the obtained polymer is a copolymer thereof, the stabilization is attained by thermally melting the copolymer or heating the copolymer in a medium in which the copolymer is soluble or insoluble to thereby selectively decompose and eliminate the unstable moiety. Particularly, a copolymer of formaldehyde or a cyclic oligomer thereof prepared according to the process of the present invention contains only a reduced amount of an unstable moiety even just after the completion of the polymerization, as compared with the copolymer prepared according to the process of the prior art, so that the stabilization thereof can be remarkably simplified and the final product is improved in stability.

[Example]

Examples of the present invention will now be described, though it is a matter of course that the present invention is not limited to them.

The terminology and methods of measurement used in the following Examples and Comparative Examples are as follows:

% and ppm: all by weight.

Yield: percentage (by weight) of the amount of the obtained polymer based on the total amount of the monomers fed.

Solution viscosity (reduced viscosity):

determined by using a solution of 0.25 g of a polymer in 50 g of a 2% solution of α-pinene in p-chlorophenol at 60 °C (evaluated as a characteristic value dependent upon the molecular weight).

Melt index (MI):

The melt index (g/10 min) measured at 190 °C is shown. It was evaluated as a characteristic value dependent upon the molecular weight. That is, the lower the melt index, the higher the molecular weight (in order to inhibit the decomposition during the measurement, a small amount of a predetermined antioxidant was added prior to the measurement).

Degree of decomposition with alkali (content of unstable moieties):

1 g of a copolymer is added to 100 ml of a 0.5% solution of ammonium hydroxide in 50% aqueous methanol. The obtained mixture was placed in a closed vessel and heated at 180 °C for 45 minutes to determine the amount of the formaldehyde extracted with the liquid medium. The amount is shown by percentage based on the polymer.

Weight loss on heating:

5 g of a copolymer was ground and mixed with a powdery stabilizer mixture comprising 2,2'-methylenebis(4-methyl-6-t-butylphenol) (0.5% by weight) and dicyandiamide (0.1%). The obtained mixture was heated in air at 220 °C for 45 minutes to determine the weight loss.

Example 1 and Comparative Example 1

200 ml of a solution of 0.04 g of molybdophosphoric acid in n-butyl ether was fed into a 500-ml separable flask fitted with a gas inlet tube and a stirrer. Pure formaldehyde gas which had been prepared by the thermal decomposition of α-polyoxymethylene at 180 °C and had been passed through a trap of

-19 °C was blown into the flask at a rate of 0.35 g/min through the gas inlet tube, while blowing helium gas into the flask through the tube as a carrier gas at a rate of 50 ml/min. A powdery polymer was immediately formed. After 120 minutes from the initiation of the feeding of formaldehyde, the generated powdery polymer was taken out, washed with acetone, dried and examined for yield and reduced viscosity. The results are shown in Table 1.

The same procedure as that described above was repeated except that the molybdophosphoric acid was replaced with 0.13 g of boron trifluoride dibutyl etherate. The results are shown in Table 1.

Table 1

| | Polymerization catalyst | Concentration of catalyst g/ℓ | Yield (%) | Reduced viscosity (dl/g) |
|---|---|---|---|---|
| Example 1 | molybdophosphoric acid | 0.20 | 78 | 1.75 |
| Comp. Ex. 1 | $BF_3$ dibutyl etherate | 0.65 | 75 | 1.32 |

Examples 2 and 3 and Comparative Example 2

200 g of trioxane was fed into a closed autoclave fitted with a jacket for passing a heating medium and agitating blades and stirred therein, while passing hot water through the jacket to thereby keep the temperature of the contents at about 70 °C. A catalyst solution given in Table 2 (a n-butyl ether solution for a heteropoly acid and a cyclohexane solution for boron trifluoride dibutyl etherate) was fed into the autoclave in such an amount as to give a catalyst concentration (based on monomer) given in Table 2. Thus, the polymerization was initiated. After 3 minutes, 300 g of a 0.1% aqueous solution of tributylamine was added to the autoclave to stop the polymerization. The contents were taken out, ground into 200-mesh or smaller particles, washed with acetone, dried and examined for yield and reduced viscosity. The results are shown in Table 2.

Table 2

| | Polymerization catalyst | Concentration* of catalyst (ppm) | Yield (%) | Reduced viscosity (dl/g) |
|---|---|---|---|---|
| Example 2 | molybdophosphoric acid | 2 | 70 | 2.02 |
| Example 3 | tungstosilicic acid | 2 | 68 | 1.98 |
| Comp. Ex. 2 | boron trifluoride dibutyl etherate | 40 (in terms of $BF_3$) | 64 | 1.80 |

* based on the total amount of monomers

It can be understood from the results shown in Tables 1 and 2 that the use of a heteropoly acid catalyst gives an enhanced yield as compared with that of boron trifluoride dibutyl etherate catalyst according to the prior art, even if the amount of the catalyst is very small, and the polymer prepared by the process of the present invention has an enhanced molecular weight.

Examples 4 to 10 and Comparative Example 3

The same polymerization and post-treatment as those described in Example 2 were repeated, except that the trioxane monomer was replaced with a monomer component comprising trioxane and 3.3% of 1,3-dioxolane and that a heteropoly acid (Examples) given in Table 3 or boron trifluoride dibutyl etherate (Comp. Ex.) was added as a catalyst in such an amount as to give a concentration given in Table 3. The characteristics of the polymers thus obtained are shown in Table 3. It can be understood from the results shown in Table 3 that the use of a heteropoly acid catalyst gives a high yield, even if the amount thereof is very small, and the polymer prepared by using the catalyst has an enhanced molecular weight and is excellent in resistance to alkali or heat.

Example 11 and Comparative Example 4

The same polymerization and post-treatment as those described in Example 4 were repeated except that the 1,3-dioxolane (comonomer) was replaced with 1,4-butandiol formal. As Comparative Example, the same procedure as that described above was repeated except that boron trifluoride dibutyl etherate was used as a catalyst. The results are shown in Table 3. The results obtained in Example 11 and Comparative Example 4 were similar to those obtained in the above-mentioned Examples and Comparative Examples, respectively.

Table 3

| | Polymerization catalyst | Concentration* of catalyst (ppm) | Comonomer | Yield (%) | MI (g/10 min) | Degree of decomposition with alkali (%) | Weight loss on heating (%) |
|---|---|---|---|---|---|---|---|
| Example 4 | molybdophosphoric acid | 2 | 1,3-dioxolane | 72 | 5.4 | 4.5 | 4.6 |
| " 5 | " | 4 | " | 78 | 5.9 | 4.7 | 4.8 |
| " 6 | tungstosilicic acid | 2 | " | 71 | 5.5 | 4.6 | 4.7 |
| " 7 | " | 4 | " | 76 | 6.0 | 4.7 | 4.9 |
| " 8 | molybdosilicic acid | 3 | " | 74 | 6.0 | 4.6 | 4.7 |
| " 9 | tungstophosphoric acid | 8 | " | 76 | 6.2 | 4.8 | 4.9 |
| " 10 | vanadosilicic acid | 10 | " | 69 | 6.3 | 4.8 | 4.9 |
| Comp. Ex. 3 | boron trifluoride dibutyl etherate | 40 | " | 65 | 8.1 | 7.2 | 7.4 |
| Example 11 | molybdophosphoric acid | 2 | 1,4-butane diol formal | 70 | 5.5 | 4.6 | 4.8 |
| Comp. Ex. 4 | boron trifluoride dibutyl ether complex | 40 (in terms of $BF_3$) | " | 63 | 8.3 | 7.4 | 7.6 |

* based on trioxane

Examples 12 and 13 and Comparative Example 5

A mixing reactor of a continuous type comprising a barrel having a section constituted of two partially overlapping circles of inner diameter of 80 mm and an effective length of 1.3 m and fitted with a jacket for passing a heating medium on the outer surface thereof and two rotating shafts fitted with many paddles

engaging with each other provided in the inside of the barrel was used. Hot water of 80 °C was passed through the jacket, while the two rotating shafts were rotated in directions different from each other at a rate of 100 rpm. Trioxane containing 3.3% of 1,3-dioxolane was continuously fed to one end of the reactor at a rate of 10 kg/hr, while a catalyst given in Table 4 was continuously fed to the same end at such a rate as to give a predetermined concentration. Thus, the copolymerization was carried out. The reaction mixture discharged from the other end was immediately thrown into a 0.1% aqueous solution of triethylamine to deactivate the catalyst, followed by the drying of the obtained polymer. The characteristics of the resulting polymer are shown in Table 4. In this continuous polymerization as well as in the above-mentioned batch-wise polymerization using an autoclave, the copolymer prepared by the use of a heteropoly acid catalyst had an enhanced degree of polymerization and was improved in resistance to alkali and heat with the yield thereof being enhanced, even if the amount of the catalyst is very small, as compared with the one prepared by the use of boron trifluoride dibutyl etherate catalyst according to the prior art.

Table 4

| | Polymerization catalyst | Concentration* of catalyst (ppm) | Comonomer | Yield (%) | MI (g/10 min) | Degree of decomposition with alkali (%) | Weight loss on heating (%) |
|---|---|---|---|---|---|---|---|
| Example 12 | molybdophosphoric acid | 2 | 1,3-dioxolane | 75 | 4.8 | 2.1 | 2.2 |
| Example 13 | tungstosilicic acid | 2 | " | 74 | 4.9 | 2.2 | 2.3 |
| Comp. Ex. 5 | boron trifluoride butyl etherate | 40 | " | 68 | 6.8 | 3.8 | 4.0 |

* based on trioxane

## Claims

1. A process for the preparation of an acetal polymer or copolymer which comprises polymerizing anhydrous formaldehyde or a cyclic oligomer thereof as a principal monomer or copolymerizing such a

principal monomer with a comonomer copolymerizable therewith characterized by using 0.1 to 5000 ppm based on the total amount of said monomers of a heteropoly acid or an acid salt thereof as a polymerization catalyst, said heteropoly acid being a compound represented by the general formula (1):

$$H_x[M_m.M'_nO_\ell]yH_2O \qquad (1)$$

wherein

M: a central element constituted of at least one member selected from among P, B, Si, Ge, Sn, As, Sb, U, Mn, Re, Cu, Ni, Ti, Co, Fe, Cr, Th and Ce,

M': at least one ligand element selected from among W, Mo, V and Nb,

m: 1 to 10,

n: 6 to 40,

$\ell$: 10 to 100,

x: an integer of 1 or above, and

y: 0 to 50.

**2.** A process for the preparation of an acetal polymer or copolymer as set forth in claim 1, wherein said heteropoly acid is one containing P or Si as a central element.

**3.** A process for the preparation of an acetal polymer or copolymer as set forth in claim 1 or 2, wherein said heteropoly acid is one containing W or Mo alone or a mixture thereof as a ligand element.

**4.** A process for the preparation of an acetal polymer or copolymer as set forth in any preceding claim, wherein said heteropoly acid comprises one or more members selected from among molybdosilicic acid, tungstosilicic acid, molybdophosphoric acid and tungstophosphoric acid.

**5.** A process for the preparation of an acetal polymer or copolymer as set forth in claim 1, wherein said heteropoly acid is used in amount of 0.2 to 50 ppm (by weight) based on the total amount of said monomers.

**6.** A process for the preparation of an acetal polymer or copolymer as set forth in any preceding claim, wherein the said heteropoly acid is added in a state diluted with an inert solvent.

**7.** A process for the preparation of an acetal polymer or copolymer as set forth in any preceding claim, wherein said principal monomer is trioxane.

**8.** A process for the preparation of an acetal copolymer as set forther in any preceding claim, wherein said principal monomer is trioxane and said comonomer is a cyclic ether or a cyclic formal.

**Patentansprüche**

**1.** Verfahren zur Herstellung eines Acetal-Polymers oder -Copolymers umfassend die Polymerisation von wasserfreiem Formaldehyd oder eines cyclischen Oligomeren desselben als einem Hauptmonomer oder Copolymerisation eines derartigen Hauptmonomers mit einem damit copolymerisierbaren Comonomer, dadurch gekennzeichnet, daß man 0,1 bis 5000 ppm bezogen auf die Gesamtmenge dieser Monomere einer Heteropolysäure oder eines Säuresalzes derselben als einen Polymerisations-Katalysator verwendet, wobei die Heteropolysäure eine Verbindung, dargestellt durch die allgemeine Formel (1)

$$H_x[M_m \bullet M'_nO_\ell]yH_2O \qquad (1)$$

ist, worin

M ein zentrales Element ist, das wenigstens aus einem Teil aus P, B, Si, Ge, Sn, As, Sb, U, Mn, Re, Cu, Ni, Ti, Co, Fe, Cr, Th und Ce ausgewählt ist,

M' wenigstens ein Ligand-Element ist, ausgewählt aus W, Mo, V und Nb,

m 1 bis 10 ist,

n 6 bis 40 ist,

$\ell$ 10 bis 100 ist,
x eine ganze Zahl von 1 oder darüber ist und
y 0 bis 50 ist.

2. Verfahren zur Herstellung eines Acetal-Polymers oder -Copolymers gemäß Anspruch 1, worin die Heteropolysäure eine Heteropolysäure ist, die P oder Si als zentrales Element enthält.

3. Verfahren zur Herstellung eines Acetal-Polymers oder -Copolymers gemäß Anspruch 1 oder 2, worin die Heteropolysäure eine Heteropolysäure ist, die allein W oder Mo oder eine Mischung derselben als ein Ligand-Element enthält.

4. Verfahren zur Herstellung eines Acetal-Polymers oder -Copolymers gemäß irgendeinem der vorhergehenden Ansprüche, worin die Heteropolysäure einen oder mehrere Teil(e) ausgewählt aus Molybdän-Kieselsäure, Wolfram-Kieselsäure, Molybdän-Phosphorsäure und Wolfram-Phosphorsäure umfaßt.

5. Verfahren zur Herstellung eines Acetal-Polymers oder -Copolymers gemäß Anspruch 1, worin die Heteropolysäure in einer Menge von 0,2 bis 50 ppm (gewichtsbezogen) bezogen auf die Gesamtmenge der Monomeren verwendet wird.

6. Verfahren zur Herstellung eines Acetal-Polymers oder -Copolymers gemäß irgendeinem der vorhergehenden Ansprüche, worin die Heteropolysäure in einem mit einem inerten Lösungsmittel verdünnten Zustand zugegeben wird.

7. Verfahren zur Herstellung eines Acetal-Polymers oder -Copolymers gemäß irgendeinem der vorhergehenden Ansprüche, worin das Hauptmonomer Trioxan ist.

8. Verfahren zur Herstellung eines Acetal-Polymers oder -Copolymers gemäß irgendeinem der vorhergehenden Ansprüche, worin das Hauptmonomer Trioxan ist und das Comonomer ein cyclischer Ether oder ein cyclisches Formal ist.

## Revendications

1. Un procédé pour la préparation d'un polymère ou copolymère acétal qui consiste à polymériser du formaldéhyde anhydre ou un oligomère cyclique de celui-ci comme monomère principal, ou à copolymériser un tel monomère principal avec un comonomère copolymérisable avec lui, caractérisé par l'utilisation de 0,1 à 5000 ppm, par rapport à la quantité totale desdits monomères, d'un hétéropolyacide ou d'un sel acide de celui-ci comme catalyseur de polymérisation, ledit hétéropolyacide étant un composé représenté par la formule générale (1) :

$$H_x[M_m \cdot M'_n O_\ell]_y H_2O \qquad (1)$$

où
M : un élément central constitué d'au moins un élément choisi parmi P, B, Si, Ge, Sn, As, Sb, U, Mn, Re, Cu, Ni, Ti, Co, Fe, Cr, Th et Ce,
M': au moins un élément coordiné choisi parmi W, Mo, V et Nb,
m : 1 à 10,
n : 6 à 40,
$\ell$ : 10 à 100
x : un nombre entier égal ou supérieur à 1, et
y : 0 à 50.

2. Un procédé pour la préparation d'un polymère ou copolymère acétal tel que spécifié dans la revendication 1, dans lequel ledit hétéropolyacide contient P ou Si comme élément central.

3. Un procédé pour la préparation d'un polymère ou copolymère acétal tel que spécifié dans la revendication 1 ou 2, dans lequel ledit hétéropolyacide contient W ou Mo individuellement ou un mélange d'entre eux comme élément coordiné.

**4.** Un procédé pour la préparation d'un polymère ou copolymère acétal tel que spécifié dans l'une quelconque des revendications précédentes, dans lequel ledit hétéropolyacide comprend un ou plusieurs acides choisis parmi l'acide molybdosilicique, l'acide tungstosilicique, l'acide molybdophosphorique et l'acide tungstophosphorique.

**5.** Un procédé pour la préparation d'un polymère ou copolymère acétal tel que spécifié dans l'une quelconque des revendications précédentes, dans lequel ledit hétéropolyacide est utilisé en une quantité de 0,2 à 50 ppm (en poids) par rapport à la quantité totale desdits monomères.

**6.** Un procédé pour la préparation d'un polymère ou copolymère acétal tel que spécifié dans l'une quelconque des revendications précédentes, dans lequel ledit hétéropolyacide est ajouté dans un état dilué avec un solvant inerte.

**7.** Un procédé pour la préparation d'un polymère ou copolymère acétal tel que spécifié dans l'une quelconque des revendications précédentes, dans lequel ledit monomère principal est le trioxanne.

**8.** Un procédé pour la préparation d'un copolymère acétal tel que spécifié dans l'une quelconque des revendications précédentes, dans lequel ledit monomère principal est le trioxanne et ledit comonomère est un éther cyclique ou un formal cyclique.